# EUROPEAN PATENT SPECIFICATION

(11) **EP 3 694 329 B1**
(45) Date of publication and mention of the grant of the patent: **22.05.2024**
(21) Application number: 18796494.5
(22) Date of filing: 09.10.2018
(51) Int. Cl.: A01N 31/02, A01N 37/46, A01N 25/02, A01N 33/04, A01N 37/08, A01N 59/00, A01N 59/20, A01N 33/12, A01P 15/00, A01P 3/00, A01P 1/00

(54) **DISINFECTANT AND DECONTAMINANT COMBINATION COMPRISING ADAMANTANE-1-CARBOXYLIC ACID ADAMANTYL-1-AMINE SALT, AND A PROTEASE**
DESINFEKTIONS- UND DEKONTAMINIERUNGSKOMBINATION UMFASSEND ADAMANTAN-1-CARBONSÄURE ADAMANTYL-1-AMIN-SALZ UND EINE PROTEASE
COMBINAISON DÉSINFECTANTE ET DÉCONTAMINANTE COMPRENANT LE SEL D'ADAMANTANE-1-CARBOXYLIQUE D'ACIDE ET D'ADAMANTANE-1-AMINE, ET UNE PROTÉASE

(30) Priority: 10.10.2017 IT 201700113884
(43) Date of publication of application: 19.08.2020
(73) Proprietor: Sciamannini, Umbro, 05100 Terni (TR) (IT); Baccaille, Franco, 06055 Marsciano (PG) (IT); Capponi, Matteo, 06050 Collazzone (PG) (IT); Primieri, Luca, 06128 Perugia (PG) (IT)
(72) Inventor: SCIAMANNINI, Umbro, 05100 Terni (TR) (IT)
(74) Representative: Marietti, Andrea
(86) International application number: PCT/IB2018/057802
(87) International publication number: WO 2019/073372

(56) References cited:
- DE-A1-102011 014 576
- GB-A- 1 127 026
- GB-A- 1 134 516
- US-A- 3 374 244
- DAVIES W L ET AL: "Antiviral Activity of 1-Adamantanamine (Amantadine)", SCIENCE, AMERICAN ASSOCIATION FOR THE ADVANCEMENT OF SCIENCE, vol. 144, 1 January 1964 (1964-01-01), pages 862-863, XP002507819, ISSN: 0036-8075, DOI: 10.1126/SCIENCE.144.3620.862
- DATABASE WPI Week 201354 Thomson Scientific, London, GB; AN 2013-K63566 XP002778963, & CN 102 973 191 A (LI A) 20 March 2013 (2013-03-20)
- .: "374 - Amantadine" In: "THE MERCK INDEX. AN ENCYCLOPEDIA OF CHEMICALS, DRUGS, AND BIOLOGICALS", 1 January 2006 (2006-01-01), WHITEHOUSE STATION, NJ, USA 032965, XP055458078, ISBN: 978-0-911910-00-1 page 64, entry 374
- VERNIER V G ET AL: "The toxicologic and pharmacologic properties of amantadine hydrochloride", TOXICOLOGY AND APPLIED PHARMACOLOGY, ACADEMIC PRESS, AMSTERDAM, NL, vol. 15, no. 3, 1 November 1969 (1969-11-01), pages 642-665, XP024883693, ISSN: 0041-008X, DOI: 10.1016/0041-008X(69)90066-0 [retrieved on 1969-11-01]
- Michael D. Lafleur ET AL: "Potentiation of Azole Antifungals by 2-Adamantanamine", Antimicrobial Agents and Chemotherapy, 1 August 2013 (2013-08-01), pages 3585-3592, XP055458123, United States DOI: 10.1128/AAC.00294-13 Retrieved from the Internet: URL:https://www.ncbi.nlm.nih.gov/pmc/artic les/PMC3719723/pdf/zac3585.pdf
- FAROUK ET AL: "Antibacterial activity of proteolytic enzymes", INTERNATIONAL JOURNAL OF PHARMACEUTICS, ELSEVIER, NL, vol. 12, no. 4, 1 November 1982 (1982-11-01), pages 295-298, XP023844902, ISSN: 0378-5173, DOI: 10.1016/0378-5173(82)90100-4 [retrieved on 1982-11-01]
- Barbara Thallinger ET AL: "Antimicrobial enzymes: An emerging strategy to fight microbes and microbial biofilms", Biotechnology journal, 1 January 2013 (2013-01-01), pages 97-109, XP055458208, Germany DOI: 10.1002/biot.201200025 Retrieved from the Internet: URL:http://onlinelibrary.wiley.com/store/1 0.1002/biot.201200313/asset/97_ftp.pdf?v=1 &t=jek5iv7c&s=13ebe7388e0f5acf35eddf49a16c 474ed0d436d6 [retrieved on 2018-03-09]
- YEN Y H ET AL: "An antifungal protease produced by Pseudomonas aeruginosa M-1001 with shrimp and crab shell powder as a carbon source", ENZYME AND MICROBIAL TECHNOLOGY, STONEHAM, MA, US, vol. 39, no. 2, 26 June 2006 (2006-06-26), pages 311-317, XP027949003, ISSN: 0141-0229 [retrieved on 2006-06-26]
- BHASKAR ET AL: "Partial purification and characterization of protease of Bacillus proteolyticus CFR3001 isolated from fish processing waste and its antibacterial activities", BIORESOURCE TECHNOLOGY, ELSEVIER, AMSTERDAM, NL, vol. 98, no. 14, 31 March 2007 (2007-03-31), pages 2758-2764, XP022011416, ISSN: 0960-8524, DOI: 10.1016/J.BIORTECH.2006.09.033
- Malithi Weerakkody: "Antimicrobial Enzymes: Modern Weaponry against Microbes - Printable Version", Biotechnologys Forums, 6 April 2013 (2013-04-06), pages 1-3, XP055458209, Retrieved from the Internet: URL:https://www.biotechnologyforums.com/pr intthread.php?tid=2271 [retrieved on 2018-03-09]
- .: "ANIOSEPT ACTIV", , 1 July 2017 (2017-07-01), pages 1-2, XP055458536, Poland Retrieved from the Internet: URL:http://www.medilab.pl/product,63,anios ept-activ?download=949 [retrieved on 2018-03-12]
- .: "Anios - Aniosept Activ MSDS", , 6 April 2017 (2017-04-06), pages 1-7, XP055458538, Poland Retrieved from the Internet: URL:http://www.medilab.pl/product,63,anios ept-activ?download=930 [retrieved on 2018-03-12]
- .: "Il Professionista della Disinfezione", CATALOGO CLINICO-OSPEDALIERO, 1 April 2008 (2008-04-01), pages 1-52, XP055458624, France, Italy Retrieved from the Internet: URL:http://diazilla.com/download/999467 [retrieved on 2018-03-13]
- .: "ANIOSEPT ACTIV 2 in 1 : Detergente disinfettante", , 1 July 2017 (2017-07-01), pages 1-13, XP055458629, Italy Retrieved from the Internet: URL:https://www.beautycore.it/wp-content/u ploads/2017/07/ANIOSEPT-ACTIV-05-03-2012-1 .pdf [retrieved on 2018-03-13]
- ÇINEL KÖKSAL YILDIRIM ET AL: "Antibacterial Efficiency of Benzalkonium Chloride Base Disinfectant According To European Standard 13727, Chemical Analysis and Validation Studies", CELAL BAYAR ÜNIVERSITESI FEN BILIMLERI DERGISI, vol. 12, no. 1, 30 April 2016 (2016-04-30) , XP055458472, ISSN: 1305-130X, DOI: 10.18466/cbujos.05638
- TOTE K ET AL: "Inhibitory effect of biocides on the viable masses and matrices of Staphylococcus aureus and Pseudomonas aeruginosa biofilms", APPLIED AND ENVIRONMENTAL MICROBIOLOGY, AMERICAN SOCIETY FOR MICROBIOLOGY, US, vol. 76, no. 10, 1 May 2010 (2010-05-01), pages 3135-3142, XP009147450, ISSN: 0099-2240, DOI: 10.1128/AEM.02095-09 [retrieved on 2010-04-02]

## Description

### Summary of the Invention

Subject-matter of the present invention is a novel combination of active ingredients, in particular a combination comprising a di-adamantane derivative and at least one protease, possibly in combination with other active components. Subject-matter of the invention are also the disinfecting and decontaminating compositions comprising the combination.

### Technical Field

Disinfecting surfaces, tools and equipment in the health field has fundamental role for the health and safety of patients and health workers. For this purpose it is necessary to be able to have products exercising rapid action and above all having broad spectrum, i.e. that are effective on all pathogens.

In addition to disinfecting, it is of primary importance an appropriate and effective treatment of the biological waste, i.e. the special waste normally produced in the health field, the treatment being made by decontaminating processes. Such treatment must provide the degradation of said organic liquids and/or their biological deactivation.

At present many products having disinfecting and/or decontaminating action are available but unfortunately their use produces drawbacks, such as for example the possibility that, in the long term, pathogenic microorganisms develop resistance and thus become insensitive to said disinfecting products and/or there is inadequate inactivation of the biological waste.

Another drawback of the disinfecting and decontaminating products commonly used is the difficulty of remove the residues of said products from the surfaces or equipment treated with them, unless by a number of rinses.

The commercial product called "Aniosept Activ", produced by the Medilab company, is a powder with disinfecting action (bactericidal, fungicidal, virucidal and sporicidal action) for disinfecting and cleaning the medical tools and devices. Said product contains, as disinfectant active ingredients, sodium percarbonate and benzalkonium chloride.

Therefore it is understood that there is the continuous need to provide novel products having disinfecting and/or decontaminating action, being readily effective on a broad spectrum of pathogens, inactivating and properly degrading the biological waste and not leaving residues.

### Objects of the Invention

It is an object of the invention to provide a novel combination of active ingredients exerting an effective cleaning, disinfecting and decontaminating action to be used non-therapeutically in particular, but not only, in the health field.

It is another object of the invention to provide a cleaning, disinfecting and decontaminating combination that quickly carries out its action and has a broad spectrum of action and acts appropriately on the biological waste.

It is a further object of the invention to provide a cleaning, disinfecting and decontaminating combination that is easily rinsable and does not leave residues.

### Description of the Invention

According to one of its aspects, an subject-matter of the invention is a combination comprising the 1-adamantane-amine salt of 1-adamantane-carboxylic acid of formula (I) 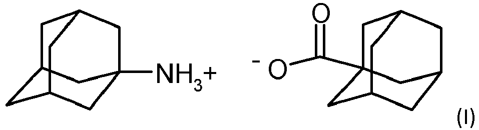 herein below also called "carboviral-αα", together with at least one protease.

The carboviral-αα compound of formula (I) is a compound known in the art, it is a milky white crystal and is described for example in Patent GB 1127026.

According to the present invention, the term "protease" (or also "proteinase" or "peptidase") means any enzyme able to make a proteolysis, thus able to cleave the peptide bonds.

According to a preferred embodiment, said at least one protease is a bacterial protease, more preferably a bacterial serine-protease. According to a particularly preferred embodiment, said at least one protease is a "subtilisin", i.e. a protease obtained from *Bacillus subtilis,* having the enzymatic classification "EC.3.4.21.62".

The proteases and subtilisins are substances known in the art.

Thus, according to a preferred embodiment, subject-matter of the invention is a combination comprising carboviral-αα of formula (I) and a subtilisin as defined above.

The ratios between the active ingredients of the combination can vary; however preferred weight ratios between carboviral-αα and peptidase (advantageously a subtilisin) are about 10-3/1, advantageously about 5/1 (w/w). Anyway other ratios can be used.

According to another embodiment, subject-matter of the invention is a combination comprising carboviral-αα of formula (I), at least one peptidase, advantageously a subtilisin and at least one further component selected from:
- an alcohol with detergent and disinfectant action, preferably isopropyl alcohol
- a chelant, preferably EDTA (ethylenediaminetetraacetic acid); and
- a disinfectant agent, for example quaternary ammonium salts, preferably benzalkonium chloride.

According to a preferred embodiment, the combination of the invention comprises at least carboviral-αα, a peptidase (advantageously a subtilisin) and a disinfecting agent, preferably benzalkonium chloride.

According to a preferred embodiment, the combination of the invention is a fixed combination consisting of
- isopropyl alcohol,
- carboviral-αα of formula (I),
- a peptidase (advantageously a subtilisin),
- EDTA and
- benzalkonium chloride.

The combination of the invention is particularly useful as detergent, disinfecting and decontaminating agent and can be used non-therapeutically in particular, but not only, in the health field.

The combination is especially useful in cleansing and disinfecting surfaces, health tools and equipment. In fact, the combination showed an effective activity against bacteria, viruses, yeasts, fungi, spores and protozoa. The combination is also particularly suitable to degrade waste that is contaminated or not and with biological characteristics, preferably in health environments such as, for example, hospital environments, emergency aids, operating blocks, critical areas of intensive hospitalization, resuscitation, intensive therapy unit and the like.

The expression "disinfecting action" (or expressions derived therefrom) herein means the ability to kill or at least deactivate microorganisms or pathogens such as bacteria, viruses, fungi, spores, yeasts and protozoa.

The expression "decontaminating action" (or expressions derived therefrom) herein means the ability to degrade or at least deactivate the organic substances contained in biological waste.

The expression "biological waste" herein means all of the special waste produced, in particular, but not only, in health environments, and include blood, urine, sputa, etc. For its use, the combination is preferably formulated as liquid compositions together with solvents, carriers, colorants, perfumes and surfactants conventionally used in the detergent, disinfecting and/or decontaminating compositions.

According to another of its aspects, subject-matter of the invention is a detergent, disinfecting and decontaminating composition comprising the combination of the invention, in all of the embodiments defined above, together with one or more components selected from conventional solvents, carriers, colorants, perfumes and surfactants.

By way of example, suitable solvents and carriers include water, peroxides, trichlorethylenes, etc.

Suitable surfactants can be anionic, cationic, non-ionic or amphoteric surfactants and include, for example, sodium lauryl sulfate (SLS), lauryl ethoxy sulfate (LES), ethoxylated alcohols (such as for example the surfactants currently sold by BASF under the trade name of Lutensol^{®} of the AT, AO, M, TO, XP, XL, XA and OA series), amino ethoxylates (such as for example the surfactants currently sold by BASF under the trade name of Lutensol^{®} of the FA series), or oleic acid amides (such as for example the surfactants currently sold by BASF under the trade name of Lutensol^{®} F SA 10).

According to a preferred embodiment, the compositions of the invention are liquid compositions comprising 1-5% carboviral-αα, advantageously 2-3%, for example 2.3 - 2.4 - 2.5%. Advantageously, such compositions are water based compositions. The compositions of the invention preferably comprise
- 1-10% isopropyl alcohol, advantageously 2-5%, for example about 2.5%;
- 1-5% carboviral-αα, advantageously 2-3%, for example 2.3 - 2.4 - 2.5%;
- 0.1-3% protease, preferably subtilisin, advantageously 0.2-1%, for example about 0.5%;
- 0.05-2.5% EDTA, advantageously 0.08-1%, for example about 0.1%;
- 1-20% benzalkonium chloride, advantageously 2-10%, for example about 5-6%;
together with one or more components selected from conventional solvents, carriers, colorants, perfumes and surfactants.

The percentages depicted above are percentages by weight based on the total weight of the composition.

The composition of the invention can be prepared at ambient temperature, by mixing the components listed above, preferably in the order depicted above, after complete dissolution of the previously added component. The mixture is stirred with a suitable equipment, for example a homogenizer, for some time, for example some hours, and at the end of the mixing proceed with appropriate filtering, and after routine checks, proceed to packaging in the desired way.

Experiments carried out by the Applicants demonstrated that the composition of the invention allows achieving all of the aforementioned pre-set purposes and also provides further advantages.

Comparative assays demonstrating the better efficacy of the composition of the invention, with respect to the known compositions sold for the same use destination, are also reported in the following Experimental section.

In fact, the composition demonstrated being a powerful disinfectant suitable for cleaning and disinfecting equipment and surfaces for health use and it is also able to act as effective decontaminant of biological fluids.

The decontaminating action of the biological waste occurs also by means of 100% inhibition of the infected nucleases by producing an actual and effective prevention.

As it will be shown in the Experimental section, the times needed to obtain a suitable disinfection are very short and the spectrum of activity is exceptionally broad. The disinfecting activity of the composition has been demonstrated on bacterial strains that are commonly found in hospitals and that are often associated to nosocomial infections.

Furthermore, the composition can be easily eliminated by means of rinsing; in fact it has been demonstrated, by chromatographic tests, that after the treatment of different materials including glass, PVC and stainless steel, 99.5% by weight of the composition is eliminated with one rinsing only.

Unlike other compositions used for the same purposes, the composition of the invention doesn't have any risk of carcinogenicity nor co-carcinogenicity. Furthermore, the composition demonstrated being effective also in the presence of hard water, it is stable and has a neutral pH, preferably 7.2.

As stated, the composition of the invention is particularly suitable for decontaminating biological waste, for example in combination with aspirating apparatus used in hospital environment. The composition of the invention ensures the degrading and decontaminating of said biological liquids inside said equipment, thus allowing to obtain sanitized and biologically inactivated, i.e. not dangerous, residues. In these cases, the composition of the invention, for example the composition of the following Example 1, is preferably used in a dosage of about 0.10-0.50 g per each kg of biological liquid to be treated, preferably about 0.25 g per each kg of biological liquid to be treated.

Particularly suitable equipment for the aspiration and treatment of biological liquids is for example that described and claimed in a patent application filed by the same Applicants together with the present patent application (WO 2020/109982).

Described herein, but not part of the claimed subject-matter is the use of the combination and composition described above as disinfectant for surfaces, tools and equipment, that can be used for example, but not only, in the health field.

Described herein, but not part of the claimed subject-matter is the use of the combination and composition described above in preventing nosocomial infections.

Described herein, but not part of the claimed subject-matter is the use of the combination and/or composition described above for decontaminating biological fluids for example, but not only, in the health field.

Described herein, but not part of the claimed subject-matter is a method for disinfecting and/or preventing nosocomial infections, comprising the use of the combination and/or composition described above.

Described herein, but not part of the claimed subject-matter is a method for decontaminating biological fluids, comprising the use of the combination and/or composition described above. In the following Experimental section, various assays are reported and demonstrate the powerful disinfecting and decontaminating efficacy of a representative composition according to the invention. Furthermore, an assay carried out by comparing a representative composition according to the invention and the commercial product "Aniosept Activ", that is used for the same purposes of the composition of the invention, is described.

### Experimental section

### Example 1

1000 grams of a liquid composition according to the invention are prepared by mixing in the following order:
- 25 g isopropyl alcohol;
- 24 g carboviral-αα;
- 5 g protease;
- 1 g EDTA;
- 59 g benzalkonium chloride;
together with sodium percarbonate, stabilized peroxide, ash in distilled water and other additives q.s. to 1000 grams.

### Example 2

The composition of Example 1 has been tested in bactericidal activity assays on bacteria, fungi, viruses, mycobacteria and spores. The assays have been carried out according to the standards pointed out.

### Example 2a

The assay has been carried out according to EN 14561:2006 standard.

### Results

- Pseudomonas aeruginosa ATCC 15442 - composition of Example 1 diluted to 0.5%: reduction > 5 logarithm in 10 minutes;
- Pseudomonas aeruginosa ATCC 15442 - composition of Example 1 diluted to 25%: reduction > 5 logarithm in 5 minutes.

### Example 2b

The assay has been carried out according to EN 13727:2003 standard.

### Results

- Escherichia coli ATCC 10356 - composition of Example 1 diluted to 2.5%: reduction > 5 logarithm in 5 minutes of action;
- Pseudomonas aeruginosa ATCC 15442- composition of Example 1 diluted to 2.5%: reduction > 5 logarithm in 5 minutes of action;
- Enterococco hirae ATCC 10541- composition of Example 1 diluted to 2.5%: reduction > 5 logarithm in 5 minutes of action;
- Escherichia coli ATCC 10356 - composition of Example 1 diluted to 0.5%: reduction > 5 logarithm in 10 minutes of action;
- Pseudomonas aeruginosa ATCC 15442- composition of Example 1 diluted to 0.5%: reduction > 5 logarithm in 10 minutes of action;
- Enterococco hirae ATCC 10541- composition of Example 1 diluted to 0.5%: reduction > 5 logarithm in 10 minutes of action.

### Example 2c

The assay has been carried out according to EN 14476:2005 standard.

### Results

- Poliovirus 1- composition of Example 1 diluted to 2.5%: reduction > 5 logarithm in 5 minutes of action;
- Adenovirus type 5 - composition of Example 1 diluted to 2.5%: reduction > 5 logarithm in 5 minutes of action;
- Poliovirus 1- composition of Example 1 diluted to 0.5%: reduction > 5 logarithm in 5 minutes of action;
- Adenovirus type 5 - composition of Example 1 diluted to 0.5%: reduction > 5 logarithm in 5 minutes of action.

### Example 2d

The assay has been carried out according to EN 13624:2005 standard.

Results in dirty conditions according to EU standards.
- Candida albicans ATCC 10231 - composition of Example 1 diluted to 0.5%: reduction > 5 logarithm in 10 minutes of action;
- Aspergillus niger ATCC 16404 - composition of Example 1 diluted to 0.5%: reduction > 5 logarithm in 10 minutes of action;
- Candida albicans ATCC 10231 - composition of Example 1 diluted to 2.5%: reduction > 5 logarithm in 5 minutes of action;
- Aspergillus niger ATCC 16404 - composition of Example 1 diluted to 2.5%: reduction > 5 logarithm in 5 minutes of action.

### Example 2e

The assay has been carried out according to EN 13624:2005 standard.

Results in dirty conditions according to EU standards.
- Candida albicans ATCC 10231 - composition of Example 1 diluted to 0.5%: reduction > 4 logarithm in 10 minutes of action;
- Aspergillus niger ATCC 16404 - composition of Example 1 diluted to 0.5%: reduction > 4 logarithm in 10 minutes of action;
- Candida albicans ATCC 10231 - composition of Example 1 diluted to 2.5%: reduction > 4 logarithm in 5 minutes of action;
- Aspergillus niger ATCC 16404 - composition of Example 1 diluted to 2.5%: reduction > 4 logarithm in 5 minutes of action.

### Example 2f

The assay has been carried out according to EN 13624:2005 standard.

Results in dirty and clean conditions according to EU standards.
- Mycobacterium avium ATCC 15769 - composition of Example 1 diluted to 2.5%: reduction > 5 logarithm in 5 minutes of action;
- Mycobacterium terrae ATCC 15755 - composition of Example 1 diluted to 2.5%: reduction > 5 logarithm in 5 minutes of action;
- Mycobacterium avium ATCC 15769 - composition of Example 1 diluted to 0.5%: reduction > 5 logarithm in 10 minutes of action;
- Mycobacterium terrae ATCC 15755 - composition of Example 1 diluted to 0.5%: reduction > 5 logarithm in 10 minutes of action.

### Example 2g

The assay has been carried out according to EN 14347:2005 standard.

The composition of Example 1 showed sporicidal activity in 10 minutes at a dilution of 2.5% and a reduction of spores of 3log₁₀ at a dilution of 0.5%.

### Example 3

The composition of Example 1 successfully passed viral inactivation tests at ambient temperature conditions in a single time of three minutes in the presence of 5% bovine fetal serum: in GLP studies carried out according to regulations provided by the US Environmental Protection Agency on the characterization and stability of the compound to the following viral cells: - Human Coronavirus ATCC VR-740, Strain 229E - Herpes Simplex Virus type ATCC VR734, Strain - Human Flu A-type-1 Hepatitis C - B - Human Immunodeficiency virus type 1 (HIV).

### Example 4

Definitions: CFU = Colony Forming Unit.

For treating biological liquids generated in hospital environment, the ability of neutralization of the same by two chemical disinfecting-decontaminating devices of proved efficacy, ANIOSEPT ACTIVE and the composition of Example 1, has been experimented comparatively on a machine called ABT 9000.

ABT 9000 is an aspirator of biological liquids aimed at facilitating containment during the operating phases, recording the amounts of liquid flowing in the operating session and maintaining the data in the patient memory for each patient, with consequent reduction of the biological risk for the operators, working environment and patients themselves. ABT 9000 is provided with two capture tanks with different types of aspiration, is equipped with 4 independent aspiration lines and self-thermodisinfection. The experimentation regarded the comparative determination of the efficacy of bacterial reduction in biological liquids (diluted human urine) with the biomedical system called ABT 9000 in combination with the composition of Example 1 and ANIOSEPT ACTIVE.

The experimentation had the target of verifying the comparative efficacy of the two above mentioned disinfecting devices in the bacterial neutralization used in combination with the ABT 9000 system.

The experimentation had the specific target of comparatively verifying the efficacy of the two disinfectants in neutralizing the microorganisms listed herein below and inoculated in biological liquid (diluted human urine).

The contaminated liquid, that is aspirated by ABT 9000, is made as follows (2 liters): 200 ml human urine, 10 ml inoculum, 1790 ml drinking water.

### METHODOLOGY

The work has been made as described herein below

All the tests have been carried out at ambient temperature.

The inoculum has been introduced in the carrier liquid (2 liters contaminated liquid made of 200 ml human urine, 10 ml inoculum, 1790 ml drinking water) from the FARM Srl lab according to criteria suitable for the biological protection by hermetic refrigerator. 4 liters contaminated liquid has been prepared in two 2 liter jerrycans. The disinfectant ANIOSEPT ACTIVE (Lot: A09916 FAB: 04/2018 EXP: 03/2021) has been prepared in liquid solution (10 g/l); the preparation, because of the commercial powder format, required about 5 minutes. The composition of Example 1 has been used in liquid solution.

The solution of ANIOSEPT ACTIVE has been loaded in the tank of the disinfectant of ABT 9000.

From the jerrycan of contaminated liquid a first sample has been collected, as reported in the sampling report - Attachment B to the present report, for the following analysis, i.e. microorganism count at 36°C (Sample 1 in Table 1-58,000,000 CFU/ml) and a volume of contaminated liquid equal to 900 ml has been aspired by ABT 9000.

By automatic check of the volume of aspired liquid, the ABT 9000 inserts the disinfectant ANIOSEPT ACTIVE with a dosage of 0.25% per kilogram of liquid aspired.

After 5 minutes of contact between liquid and disinfectant, a sample for the following microorganism count is taken (Sample 2 in Table 1 - 530 CFU/ml).

Thus, the disinfectant tank and the main capture tank are washed, after unloading the tank into containers.

The test has been repeated.

The solution of ANIOSEPT ACTIVE has been loaded in the tank of the disinfectant of ABT 9000.

A volume of contaminated liquid equal to 900 ml has been aspired by ABT 9000 from the jerrycan of carrier liquid.

By automatic check of the volume of aspired liquid, the ABT 9000 inserts the disinfectant ANIOSEPT ACTIVE with a dosage of 0.25% per kilogram of liquid aspired.

After 5 minutes of contact between liquid and disinfectant, a sample for the following microorganism count is taken (Sample 3 in Table 2 - 140 CFU/ml).

Thus, the disinfectant tank and the main capture tank are washed, after unloading into containers.

Thus, the solution of Example 1 has been loaded in the tank of the disinfectant of ABT 9000.

From the tank of contaminated liquid a first sample has been collected for the following analysis, i.e. microorganism count at 36°C (Sample 4 in Table 3 - 58,000,000 CFU/ml) and a volume of contaminated liquid equal to 900 ml has been aspired by ABT 9000.

By automatic check of the volume of aspired liquid the ABT 9000 inserts the disinfectant, the composition of Example 1, with a dosage of 0.25% per kilogram of liquid aspired.

After 5 minutes of contact between liquid and disinfectant, a sample for the following microorganism count is taken (Sample 5 in Table 4 - 120 CFU/ml).

Thus, the capture tank is washed, after unloading into containers.

The test has been repeated.

A volume of contaminated liquid equal to 900 ml has been aspired by ABT 9000 from the jerrycan of contaminated liquid.

By automatic check of the volume of aspired liquid the ABT 9000 inserts the disinfectant, the composition of Example 1, with a dosage of 0.25% per kilogram of liquid aspired.

After 5 minutes of contact between liquid and disinfectant, a sample for the following microorganism count is taken (Sample 6 in Table 5 - 0 CFU/ml).

Thus, the disinfectant tank and the capture tank are washed, after unloading the tank into containers.

The whole process has been carried out in a closed circuit.

**Table 1**

| Sample 1 - inoculum + biological liquid | | | |
|---|---|---|---|
| Examination | Value | Unit of Measure | Method |
| Count of the microorganisms at 36°C | 58000000 | CFU/ml | UNI EN ISO 6222:2001 |

**Table 2**

| Sample 2 - sample after 5 minutes in contact with 0.25% ANIOSEPT ACTIVE | | | |
|---|---|---|---|
| Examination | Value | Unit of Measure | Method |
| Count of the microorganisms at 36°C | 530 | CFU/ml | UNI EN ISO 6222:2001 |

**Table 3**

| Sample 3 - sample after 5 minutes in contact with 0.25% ANIOSEPT ACTIVE | | | |
|---|---|---|---|
| Examination | Value | Unit of Measure | Method |
| Count of the microorganisms at 36°C | 140 | CFU/ml | UNI EN ISO 6222:2001 |

**Table 4**

| Sample 4 - inoculum + biological liquid | | | |
|---|---|---|---|
| Examination | Value | Unit of Measure | Method |
| Count of the microorganisms at 36°C | 58000000 | CFU/ml | UNI EN ISO 6222:2001 |

**Table 5**

| Sample 5 - sample after 5 minutes in contact with 0.25% composition of Example 1 | | | |
|---|---|---|---|
| Examination | Value | Unit of Measure | Method |
| Count of the microorganisms at 36°C | 120 | CFU/ml | UNI EN ISO 6222:2001 |

**Table 6**

| Sample 6 - sample after 5 minutes in contact with the 0.25% composition of Example 1 | | | |
|---|---|---|---|
| Examination | Value | Unit of Measure | Method |
| Count of the microorganisms at 36°C | 0 | CFU/ml | UNI EN ISO 6222:2001 |

### RESULTS

The first sample had an initial microorganism count of 58 * 106 CFU/ml. The second sample, i.e. that collected after 5 minutes in contact with the disinfectant ANIOSEPT ACTIVE, had a count of 530 CFU/ml.

The third sample, i.e. that collected after 5 minutes in contact with the disinfectant ANIOSEPT ACTIVE, had a count of 140 CFU/ml.

The forth sample had an initial microorganism count of 58 * 106 CFU/ml.

The fifth sample, i.e. that collected after 5 minutes in contact with the disinfectant, the composition of Example 1, had a count of 120 CFU/ml.

The sixth sample, i.e. that collected after 5 minutes in contact with the disinfectant, the composition of Example 1, had a count of 0 CFU/ml.

### CONCLUSIONS

From the analysis carried out, the results show that the disinfectant, the composition of Example 1, is more effective than ANIOSEPT ACTIVE as it guarantees a better abatement of the total microbial load at the same contact time, with a dosage of 0.25% per kilogram of aspirated liquid.

### METHODOLOGICAL AND ETHICAL CONSIDERATIONS

The study remains in compliance with the ethical and methodological principles of the International Study Protocols.

## Claims

1. A combination comprising the 1-adamantane-amine salt of 1-adamantane-carboxylic acid of formula (I) 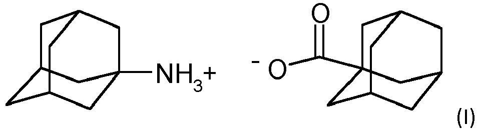 together with at least one protease.

2. The combination according to claim 1, **characterized in that** said protease is a bacterial protease, preferably a bacterial serine-protease, more preferably a subtilisin.

3. The combination according to claim 1 or 2, **characterized in that** it comprises at least also one further component selected from:
- an alcohol with detergent and disinfectant action;
- a chelant; and
- a disinfecting agent, for example quaternary ammonium salts.

4. The combination according to any one of claims 1 to 3, **characterized in that** it consists of isopropyl alcohol, compound of formula (I), a subtilisin, EDTA and benzalkonium chloride.

5. A disinfectant and decontaminant composition, comprising the combination of the invention according to any one of claims 1 to 4, together with one or more components selected from conventional solvents, carriers, colorants, perfumes and surfactants.

6. The composition according to claim 5, **characterized in that** it is a liquid composition.

7. The composition according to claim 6, **characterized in that** it is a liquid water-based composition.

8. The composition according to claim 6 or 7, **characterized in that** it comprises 1-5% compound of formula (I).

9. The composition according any one of claims 5 to 8, **characterized in that** it comprises:
- 1-10% isopropyl alcohol;
- 1-5% compound of formula (I);
- 0.1-3% protease, preferably subtilisin;
- 0.05-2.5% EDTA;
- 1-20% benzalkonium chloride;
together with one or more components selected from conventional solvents, carriers, colorants, perfumes and surfactants, said percentages being by weight, based on the total weight of the composition.

10. The composition according to claim 9, **characterized in that** it comprises
- about 2.5% isopropyl alcohol;
- about 2.5% compound of formula (I);
- about 0.5% subtilisin;
- about 0.1% EDTA;
- 5-6% benzalkonium chloride;
together with one or more components selected from conventional solvents, carriers, colorants, perfumes and surfactants.

11. The composition according to claim 9, **characterized in that** it is liquid and **in that** it comprises:
- 25 g isopropyl alcohol;
- 24 g compound of formula (I);
- 5 g protease;
- 1 g EDTA;
- 59 g benzalkonium chloride;
together with sodium percarbonate, stabilized peroxide, ash in distilled water and other additives q.s. to 1000 grams.

## Patentansprüche

1. Kombination, umfassend das 1-Adamantanamin-Salz der 1-Adamantancarbonsäure der Formel (I) 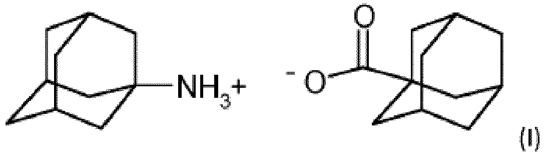 zusammen mit mindestens einer Protease.

2. Kombination nach Anspruch 1, **dadurch gekennzeichnet, dass** die Protease eine bakterielle Protease ist, vorzugsweise eine bakterielle Serinprotease, besonders bevorzugt ein Subtilisin.

3. Kombination nach Anspruch 1 oder 2, **dadurch gekennzeichnet, dass** sie mindestens auch eine weitere Komponente enthält, die ausgewählt ist aus:
- einem Alkohol mit reinigender und desinfizierender Wirkung;
- einem Chelat; und
- einem Desinfektionsmittel, beispielsweise quartäre Ammoniumsalze.

4. Kombination nach einem der Ansprüche 1 bis 3, **dadurch gekennzeichnet, dass** sie aus Isopropylalkohol, Verbindung der Formel (I), einem Subtilisin, EDTA und Benzalkoniumchlorid besteht.

5. Desinfizierende und dekontaminierende Zusammensetzung, umfassend die Kombination der Erfindung nach einem der Ansprüche 1 bis 4, zusammen mit einer oder mehreren Komponenten, ausgewählt aus herkömmlichen Lösungsmitteln, Trägern, Farbstoffen, Duftstoffen und Tensiden.

6. Zusammensetzung nach Anspruch 5, **dadurch gekennzeichnet, dass** es sich um eine flüssige Zusammensetzung handelt.

7. Zusammensetzung nach Anspruch 6, **dadurch gekennzeichnet, dass** es sich um eine flüssige Zusammensetzung auf Wasserbasis handelt.

8. Zusammensetzung nach Anspruch 6 oder 7, **dadurch gekennzeichnet, dass** sie 1 bis 5 % Verbindung der Formel (I) enthält.

9. Zusammensetzung nach einem der Ansprüche 5 bis 8, **dadurch gekennzeichnet, dass** sie Folgendes umfasst:
- 1 bis 10 % Isopropylalkohol;
- 1 bis 5 % Verbindung der Formel (I);
- 0,1 bis 3 % Protease, vorzugsweise Subtilisin;
- 0,05 bis 2,5 % EDTA;
- 1 bis 20 % Benzalkoniumchlorid;
zusammen mit einer oder mehreren Komponenten, ausgewählt aus herkömmlichen Lösungsmitteln, Trägern, Farbstoffen, Duftstoffen und Tensiden, wobei die Prozentangaben auf das Gewicht bezogen sind, bezogen auf das Gesamtgewicht der Zusammensetzung.

10. Zusammensetzung nach Anspruch 9, **dadurch gekennzeichnet, dass** sie umfasst:
- etwa 2,5 % Isopropylalkohol;
- etwa 2,5 % Verbindung der Formel (I);
- etwa 0,5 % Subtilisin;
- etwa 0,1 % EDTA;
- 5 bis 6 % Benzalkoniumchlorid;
zusammen mit einer oder mehreren Komponenten, ausgewählt aus herkömmlichen Lösungsmitteln, Trägern, Farbstoffen, Duftstoffen und Tensiden.

11. Flüssige Zusammensetzung nach Anspruch 9, **dadurch gekennzeichnet, dass** sie Folgendes umfasst:
- 25 g Isopropylalkohol;
- 24 g Verbindung der Formel (I);
- 5 g Protease;
- 1 g EDTA;
- 59 g Benzalkoniumchlorid;
zusammen mit Natriumpercarbonat, stabilisiertem Peroxid, Asche in destilliertem Wasser und anderen Zusatzstoffen q.s. bis 1000 Gramm.

## Revendications

1. Combinaison comprenant le sel de 1-adamantane-amine de l'acide 1-adamantane-carboxylique de formule (I) 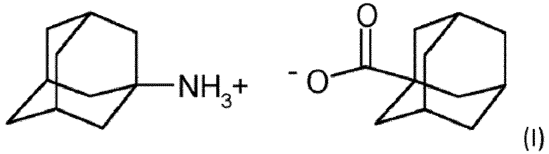 avec au moins une protéase.

2. Combinaison selon la revendication 1, **caractérisée par le fait que** ladite protéase est une protéase bactérienne, de préférence une sérine-protéase bactérienne, plus préférentiellement une subtilisine.

3. Combinaison selon la revendication 1 ou 2, **caractérisée par le fait qu'**elle comprend aussi au moins un autre composant choisi parmi :
- un alcool à action détergente et désinfectante ;
- un chélateur ; et
- un agent désinfectant, par exemple des sels d'ammonium quaternaire.

4. Combinaison selon l'une des revendications 1 à 3, **caractérisée par le fait qu'**elle est constituée d'alcool isopropylique, d'un composé de formule (I), d'une subtilisine, d'EDTA et de chlorure de benzalkonium.

5. Composition désinfectante et décontaminante, comprenant la combinaison de l'invention selon l'une quelconque des revendications 1 à 4, ainsi qu'un ou plusieurs composants choisis parmi les solvants conventionnels, les supports, les colorants, les parfums et les tensioactifs.

6. Composition selon la revendication 5, **caractérisée par le fait qu'**il s'agit d'une composition liquide.

7. Composition selon la revendication 6, **caractérisée par le fait qu'**il s'agit d'une composition liquide à base d'eau.

8. Composition selon la revendication 6 ou 7, **caractérisée en ce qu'**elle comprend 1-5% de composé de formule (I).

9. Composition selon l'une des revendications 5 à 8, **caractérisée en ce qu'**elle comprend :
- 1-10% d'alcool isopropylique ;
- 1-5% de composé de formule (I) ;
- 0,1-3% de protéase, de préférence de la subtilisine ;
- 0,05-2,5 % d'EDTA;
- 1-20% de chlorure de benzalkonium ;
ainsi qu'un ou plusieurs composants choisis parmi les solvants conventionnels, supports, colorants, parfums et tensioactifs, ces pourcentages étant exprimés en poids, par rapport au poids total de la composition.

10. Composition selon la revendication 9, **caractérisée par le fait qu'**elle comprend
- environ 2,5 % d'alcool isopropylique ;
- environ 2,5 % de composé de formule (I) ;
- environ 0,5 % de subtilisine ;
- environ 0,1 % d'EDTA ;
- 5-6% de chlorure de benzalkonium ;
ainsi qu'un ou plusieurs composants choisis parmi les solvants conventionnels, supports, colorants, parfums et agents tensioactifs.

11. Composition selon la revendication 9, **caractérisée par le fait qu'**elle est liquide et qu'elle comprend :
- 25 g d'alcool isopropylique ;
- 24 g de composé de formule (I) ;
- 5 g de protéase ;
- 1g d'EDTA;
- 59 g de chlorure de benzalkonium ;
avec du percarbonate de sodium, du peroxyde stabilisé, des cendres dans de l'eau distillée et d'autres additifs q.s. à 1000 grammes.
